# EUROPEAN PATENT APPLICATION

(11) **EP 1 840 428 A1**
(43) Date of publication of application: **03.10.2007**
(21) Application number: 07105106.4
(22) Date of filing: 28.03.2007
(51) Int. Cl.: F16K 15/02, F16K 17/04

(54) **Relief valve**

(30) Priority: 30.03.2006 JP 2006096077
(71) Applicant: Yamada Manufacturing Co., Ltd., Kiryu-shi, Gunma-ken (JP)
(72) Inventor: Enzaka, Kazuo, Isesaki-shi, Gunma-ken (JP); Umezawa, Yoshihiro, Isesaki-shi, Gunma-ken (JP); Ono, Yasunori, Isesaki-shi, Gunma-ken (JP)
(74) Representative: Skone James, Robert Edmund

(57) **Abstract**

A relief valve mounted on a pump such as an oil pump, for preventing pressure abnormality by allowing fluid to escape when a discharge fluid pressure reaches a predetermined set value, wherein influx of oil sludge into the valve can be prevented. The relief valve comprises: a valve housing (5); and a guide inflow path (7) which is in the same direction as a slide direction of a valve main body that slides along a valve guide path of the valve housing under a predetermined pressure and which provides communication between a discharge flow path and the valve guide path. The valve guide path (7) is arranged so that a relief opening part thereof is closed downwardly by the valve main body. The valve guide path and the guide inflow path are arranged above an orthogonal cross section of the discharge flow path.

## Description

The present invention relates to a relief valve mounted on a pump such as an oil pump, for preventing pressure abnormality by allowing fluid to escape when a discharge fluid pressure reaches a predetermined set value, the relief valve also being able to prevent influx of oil sludge into the valve.

Relief valves are mounted on pumps such as oil pumps. When the discharge oil (fluid) pressure of the pump reaches a set value the relief valve, subject to movement of a valve member, allows oil to escape though an outlet port provided in the circumferential wall of a cylinder path.

While the relief valve slides in the axial direction due to oil pressure resisting the oil pressure produced by the elastic force of a spring, there are times when the operation of the relief valve is locked or slowed at this time due to clogging of the relief valve or spring caused by sludge (impurities) contained in the oil (fluid). This results in a problem of either abnormally high or low oil pressure in the path along which the oil (fluid) flows which, in turn, heightens concerns about problems arising in the oil pressure circuit.

Japanese Laid-open Utility Model Application No. S62-29487, Japanese Laid-open Utility Model Application No. S63-154709, Japanese Laid-open Utility Model Application No. H2-24171 and Japanese Laid-open Patent Application No. 2004-293625 have been disclosed with a view to obviating this problem inherent to relief valves. Japanese Laid-open Utility Model Application No. S62-29487 and Japanese Laid-open Utility Model Application No. S63-154709 disclose structures in which the relief valve is arranged in a sideways-facing orientation to prevent sludge from reaching the relief valve. In addition, Japanese Laid-open Utility Model Application No. H2-24171 describes machining or the like of a cylinder hole that renders clogging caused by sludge reaching the relief valve unlikely. Furthermore, Japanese Laid-open Patent Application No. 2004-293625 describes the provision of a sludge-removing mechanism in the relief valve itself.

In Japanese Laid-open Utility Model Application No. S62-29487 and Japanese Laid-open Utility Model Application No. S63-154709 the sludge clogging prevention effect afforded by provision of the cylinder in either a sideways-facing orientation or in the horizontal is inadequate. In addition, while provision of a depression by machining or the like of a cylinder hole in the inner circumferential surface as disclosed in Japanese Laid-open Utility Model Application No. H2-24171 prevents sludge from reaching an area in close proximity of the relief valve, a concern remains that various changes in conditions will lead readily to clogging caused by sludge. In addition, the mechanism of the relief valve comprising the sludge-removal mechanism in the relief valve itself as disclosed in the Japanese Laid-open Utility Model Application No. 2004-293625 is complex and comprises a greater number of components parts. It is an object of the present invention to prevent the sludge itself from reaching the relief valve.

Thereupon, and as a result of earnest research carried out by the inventors of the present invention with a view to obviating the problems described above, the problems described above were resolved in accordance with a first aspect of the invention by a relief valve comprising a valve housing and a guide inflow path which is in the same direction as a slide direction of a valve main body that slides along a valve guide path of the valve housing under a predetermined pressure and which provides communication between a discharge flow path and the valve guide path, the valve guide path being arranged so that the relief opening part thereof is closed downwardly by the valve main body, and the valve guide path and the guide inflow path being positioned above an orthogonal cross section of the discharge flow path.

Accordingly, sludge mixed with the fluid in the discharge flow path precipitates due to gravity and the sludge accumulates on the lower part in the orthogonal cross section of the discharge flow path, that is to say, the base surface thereof and, accordingly, only fluid of a state from which the sludge has been removed is able to flow from the guide inflow path into the valve guide path when the relieving operation is being performed and influx of the sludge into the relief valve can be prevented.

In addition, because the valve guide path is arranged so that the relief opening part is closed downwardly by the valve main body and, in addition, the valve guide path is positioned above the guide inflow path and the orthogonal cross section of the discharge flow path, a state in which the guide inflow path and valve guide path are provided in positions above and away from the position in which the sludge mixed with the fluid precipitates and accumulates in the discharge flow path and, moreover, in which it is even more difficult for the sludge to influx into the inflow path and valve guide path is established and, accordingly, influx of the sludge into the relief valve can be even more strongly prevented.
Preferably, a sludge trap is formed in a position forward of the guide inflow path in the direction of relief flow. The sludge is thus trapped in a sludge trap and, accordingly, the influx of the sludge into the relief valve can be even more reliably prevented.

In accordance with a second aspect of the invention, a relief valve comprises a valve housing and a guide inflow path which is in the same direction as a slide direction of a valve main body that slides along a valve guide path of the valve housing under a predetermined pressure and which provides communication between a discharge flow path and the valve guide path, the valve guide path being arranged so that the relief opening part thereof is closed upwardly by the valve main body, the valve guide path and the guide inflow path being positioned above an orthogonal cross section of the discharge flow path, and a sludge trap being formed in the discharge flow path in a position forward of the guide inflow path in the direction of relief flow.

Thus, even if the sludge mixed with the fluid flowing along the discharge flow path that accumulates due to gravity in the lower part orthogonal cross section of the discharge flow path is moved closer to the guide inflow path as a result of further flow of the fluid, the sludge falls into the sludge trap positioned forward of the guide inflow path in the direction of flow. Accordingly, the sludge can be prevented from reaching the guide inflow path and, in turn, influx of sludge into the guide inflow path and valve guide path can be prevented. In addition, the most common arrangement state of the valve guide path is the type that allow the valve guide path to be closed upwardly by the valve main body, and the manufacture thereof, which is based on a simple machining alone, is much simpler than provision of a normal fluid circuit.

In accordance with a third aspect of the invention, a relief valve comprises a valve housing and a guide inflow path which is in the same direction as a slide direction of a valve main body that slides along a valve guide path of the valve housing under a predetermined pressure and which provides communication between a discharge flow path and a relief opening part of that valve guide path, the valve guide path being arranged so that a relief opening part thereof is closed sideways by the valve main body, and a sludge trap being formed in a position forward of the guide inflow path in the direction of relief flow.

Because the valve guide path is arranged in a sideways direction, the range across which the relief valve is arranged can be made smaller and, in turn, a compacting of the relief valve can be achieved.
The valve guide path may communicate with the discharge flow path by way of the guide inflow path. When the sludge trap is formed in the discharge flow path in a rearward position of the guide inflow path in the direction of relief flow, in the unlikely even of stoppage of the operation of an apparatus such as the pump resulting in flow of the fluid in the direction opposite to the direction of relief flow the sludge traps formed both forward and rearward of the guide inflow path ensure the sludge can be reliably trapped and further ensure and prevent the influx of sludge into the valve housing.

A branched discharge flow path may be formed in the discharge flow path, and the valve guide path communicates with the branched discharge flow path by way of the guide inflow path. Thus, abnormal pressure of the fluid is able to be more easily determined as a result of formation of a branched discharge flow path in the discharge flow path and communication of the valve guide path with the branched discharge flow path by way of the guide inflow path.
In some cases, the discharge flow path inclines upward along the direction of relief flow in the vicinity of a location for communication with the guide inflow path. Thus, because the discharge flow path is inclined upward along the direction of relief flow in the vicinity of a location for communication with the guide inflow path, a structure in which, as the sludge mixed in the fluid is moved in a downward incline due to gravity as it precipitates, influx of the sludge into guide inflow path and valve guide path is less likely to occur can be provided.

The branched discharge flow path may be formed in a substantially vertical direction, a sludge trap is connectively formed in a substantially vertical direction from a lower end of the branched discharge flow path, and a guide inflow path is formed substantially horizontally between a lower end position of the branched discharge flow path and the sludge trap.

By connective formation of the branched discharge flow path and sludge trap in the substantially vertical direction and formation of the guide inflow path in the horizontal between the lower end position of the branched discharge flow path and the sludge trap, a structure in which the sludge, due to gravity, is able to be easily trapped in the sludge trap can be provided. In addition, because the guide inflow path is positioned in the lower end of the branched discharge flow path, that is to say, in the upper end of the sludge trap, a structure in which the guide inflow path is formed substantially horizontally and, therefore, in which influx of the sludge into the guide inflow path is unlikely, can be provided.

Some examples of relief valves according to the present invention will now be described with reference to the accompanying drawings, in which:-
FIG. 1A is a plan view of a state in which a first embodiment of the present invention is arranged in a pump casing, and B is a cross-sectional view of a relief valve of A;
FIG. 2 is an action diagram of sludge influx prevention during a relieving operation of the first embodiment of the present invention;
FIG. 3A is a cross-sectional view of a state in which a valve guide path of the first embodiment is inclined, and B is a cross-sectional view of a inclined state thereof in the opposing direction to A;
FIG. 4A is a cross-sectional view of a state in which a branched discharge flow path of the first embodiment is inclined in the direction of flow, and B is a cross-sectional view in which a sludge trap is formed in the branched discharge flow path of the first embodiment;
FIG. 5 is a plan view of a casing showing a partial cross section of the linking of the discharge flow path and guide inflow path of the first embodiment;
FIG. 6A is a plan view of a state in which a second embodiment of the present invention is arranged in a pump casing, B is a cross-sectional view of the relief valve of A, and C is a cross-sectional view along the line of the arrows Xa-Xa of B, and D is a cross-sectional view along the line of the arrows Xb-Xb of B;
FIG. 7 is an action diagram of sludge influx prevention during a relieving operation of the second embodiment of the present invention;
FIG. 8A is a cross-sectional view of a state in which the valve guide path is inclined in the second embodiment, and B is a cross-sectional view of an inclined state thereof in the opposing direction to A;
FIG. 9A is a cross sectional view of a state in which the branched discharge flow path of the second embodiment is inclined in the direction of flow, B is a cross-sectional view of an embodiment in which the branched discharge flow path of the second embodiment is inclined in the flow direction and a sludge trap is formed in the direction of flow in both a forward position and rearward position of the guide inflow path;
FIG. 10 is plan view of a casing showing a partial cross section of the linking of the discharge flow path and guide inflow path of the second embodiment;
FIG. 11A is a plan view of a state in which a third embodiment of the present invention is arranged in a pump casing, B is a cross-sectional view of a relief valve, and C is a cross-sectional view of a different type of relief valve to that of B; and
FIG. 12A is a plan view of a state in which a sludge trap of the third embodiment provided vertically and in a lower position thereof is arranged in a pump casing, B is a main part expanded cross-sectional view of A, and C is an expanded cross-sectional view of an embodiment in which the region of the guide opening part widens toward the branched path side.

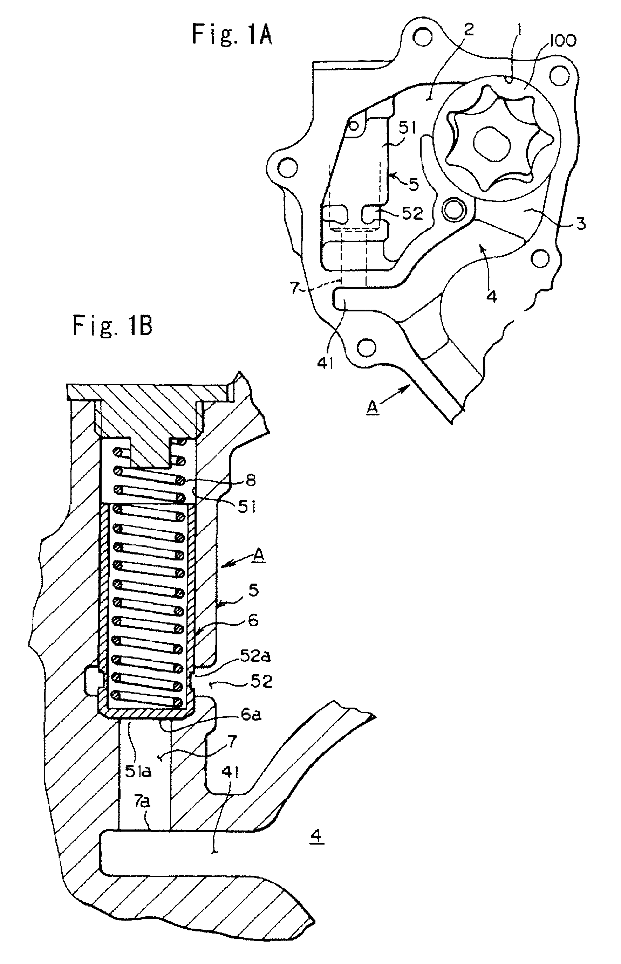

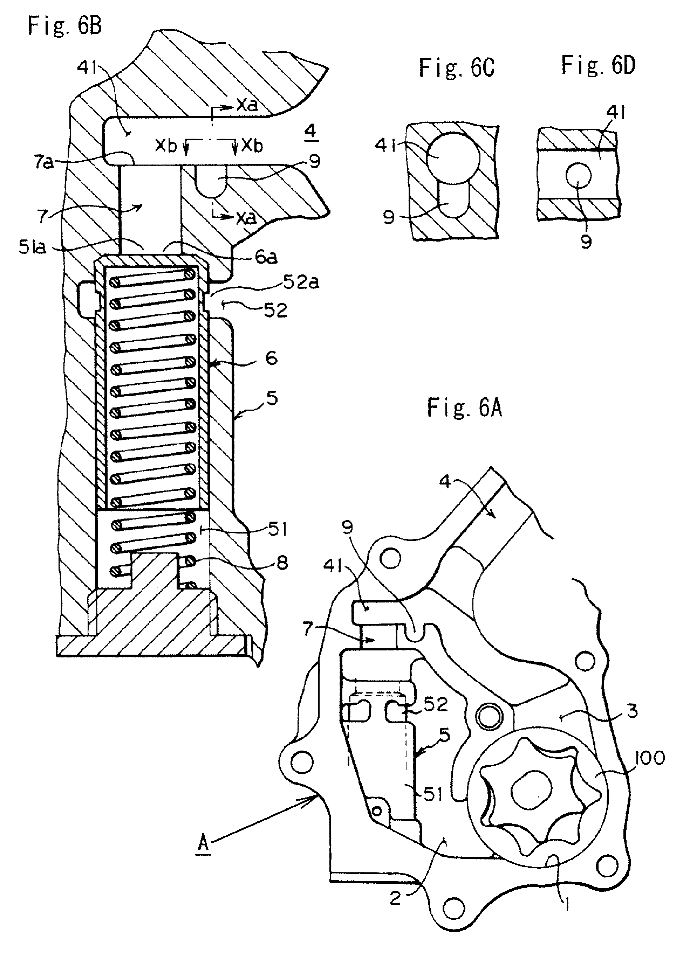

The embodiments of the present invention will be hereinafter described with reference to the drawings. First, the relief valve of the present invention is in most cases integrally formed in a pump casing of an oil pump or the like. The casing A is partitioned into a pump body and a pump cover. As shown in FIG. 1A and FIG. 6A and other drawings, a rotor chamber 1 is formed in the interior of the casing A, and a rotor 100 configured from an outer rotor comprising internal teeth and an inner rotor comprising external teeth is arranged in the rotor chamber 1.

An inflow port 2, a discharge port 3 are formed in the rotor chamber 1, and a discharge flow path 4 into which discharge fluid from the discharge port 3 is provided. The discharge flow path 4 leads to the exterior of the casing A. As shown in FIG. 1A and FIG. 6A, a branched discharge flow path 41 is formed in the discharge flow path 4, and the branched discharge flow path 41 communicates with the relief valve of the present invention.

The relief valve of the present invention is principally configured from a valve housing 5, a valve main body 6 and a guide inflow path 7. A valve guide path 51 along which the valve main body 6 slides is formed in the valve housing 5, the valve main body 6 sliding along the interior thereof. A relief opening part 51a is formed in the valve housing 5, the relief opening part 51a functioning as an entrance for the fluid into the valve guide path 51 when the relieving operation is being performed.

Furthermore, a fluid return part 52 is formed in the valve guide path 51. The fluid return part 52 is configured from a circuit for returning a return fluid to the inflow port 2 side when the relieving operation is being performed. In addition, the valve main body 6 is housed with freedom to slide in the valve guide path 51 and, at times of normal operation, that is to say, when the relieving operation is not being performed, a head part 6a of the valve main body 6 closes the relief opening part 51a and a return opening part 52a of the fluid return part 52. The valve main body 6 is elastically urged by a spring 8 mounted on the valve guide path 51 and normally pressed on the relief opening part 51a.

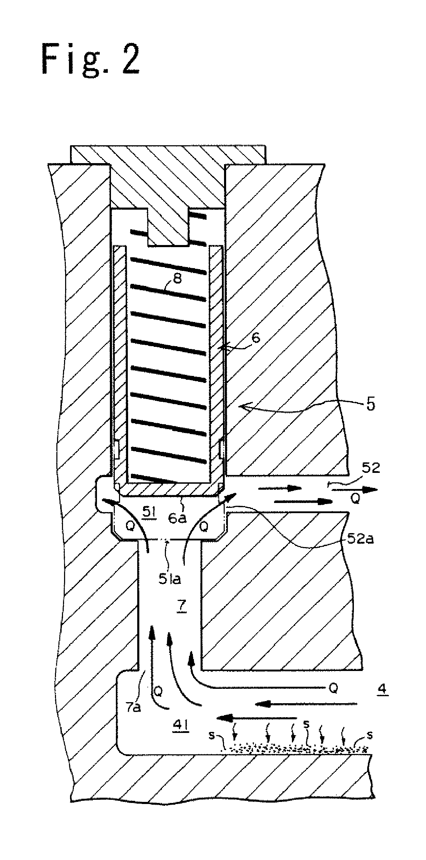

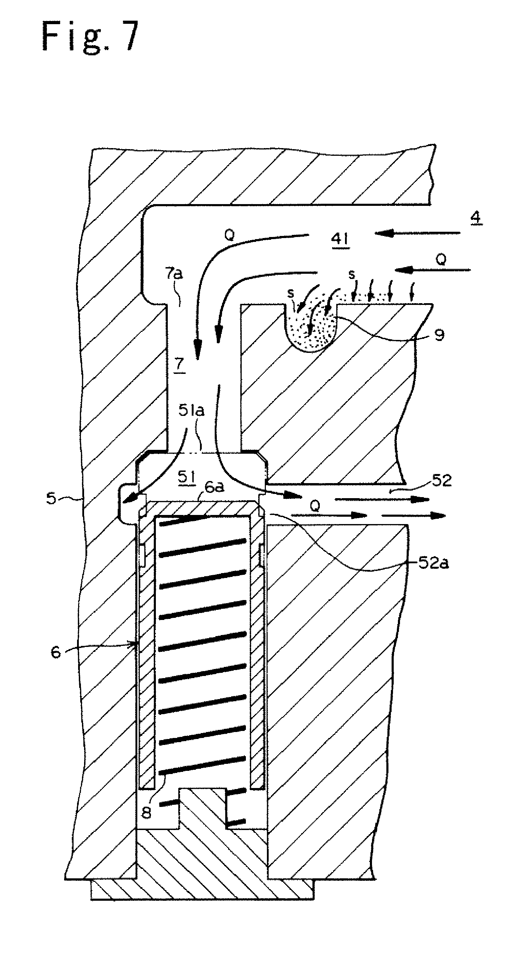

When the fluid pressure in the discharge flow path 4 increases and reaches or exceeds a predetermined pressure, the head part 6a of the valve main body 6 is pushed by fluid from the branched discharge flow path 41 by way of the guide inflow path 7 and caused to slide along the valve guide path 51, thereby providing communication between the relief opening part 51a and the fluid return part 52 which had been closed by the valve main body 6a of the valve main body 6 (see FIG. 2 and FIG. 7). As a result, the relieving operation is initiated.

There are three main embodiments of the relief valve of the present invention based on configurations for preventing influx of the sludge of the fluid that flows along the discharge flow path 4 into the guide inflow path 7 and the valve guide path 51. The means by which influx of a sludge s into the valve guide path 51 and guide inflow path 7 is prevented is based on an operation in which the sludge s mixed in a fluid Q precipitates due to gravity.

As shown in FIGS. 1 to FIG. 5, a first embodiment thereof constitutes a structure in which the relief opening part 51a is normally positioned at the lowermost part of the valve guide path 51 and an inflow opening part 7a of the guide inflow path 7 is positioned in an upper part in the orthogonal cross section of the discharge flow path 4. As shown in FIG. 1A, the valve housing 5 is arranged in the casing A in such a way that the relief opening part 51a of the valve guide path 51 is normally at the lowermost part. The positioning of the relief opening part 51a of the valve guide path 51 in the lowermost part thereof in this way and the closure of the relief opening part 51a by the head part 6a of the valve main body 6 in a downward-orientated state in this way is referred to as a structure in which the valve guide path 51 is arranged downwardly.

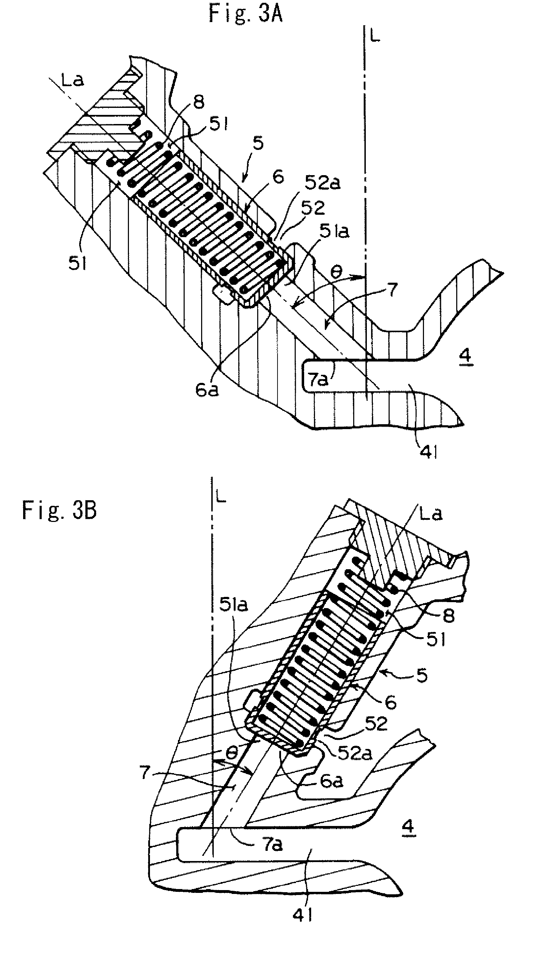

Taking the direction in which the valve main body 6 slides in this embodiment as the guide direction of the valve guide path 51, in the structure of this first embodiment in which the valve guide path 51 is arranged in downwardly, the guide direction may be set to the vertical direction as shown in FIG. 1, FIG. 2, FIG. 4 and FIG. 5, and the guide direction may be inclined as shown in FIG. 3. A guide direction line La of this incline of the valve guide path 51 is inclined at an angle θ to a vertical axial line L. As shown in FIGS. 3A and B, the range of the incline angle θ excludes only the horizontal and is ±90° with respect to the vertical axial line L.

As shown in FIGS. 1B and FIG. 2, the valve guide path 51 of which the relief opening part 51a positioned in the lowermost part thereof provides communication with the guide inflow path 7 communicates with a branched discharge flow path 41 of the discharge flow path 4 by way of the guide inflow path 7 . The inflow opening part 7a that provides communication of the guide inflow path 7 with the branched discharge flow path 41 of the discharge flow path 4 is positioned in the upper part in the orthogonal cross section of the inner circumferential side of the branched discharge flow path 41.

The mechanism of the first embodiment for preventing influx of the sludge s mixed in the fluid Q into the guide inflow path 7 and valve guide path 51 will be described with reference to FIG. 2. The relief opening part 51a of the valve guide path 51 is normally positioned in the lowermost part of the valve guide path 51. The inflow opening part 7a of the guide inflow path 7 is positioned in the upper part of the orthogonal cross section of the discharge flow path 4. The sludge s mixed in the fluid Q such as oil flowing along the branched discharge flow path 41 of the discharge flow path 4 precipitates by gravity and is trapped in the lower part (base part) of the orthogonal cross section of the discharge flow path 4 (discharge flow path 41).

Accordingly, the sludge s is prevented from reaching the inflow opening part 7a and only the fluid Q in which no mixing of the sludge s has occurred flows into the valve guide path 51 from the guide inflow path 7 when the relieving operation is being performed. The flow of the fluid Q is described in FIG. 2 as a flow line (thick arrow line). Influx of the sludge s into the guide inflow path 7 and into guide path 51 does not occur when the relieving operation is being performed and, accordingly, influx of the sludge s into the valve guide path 51 can be prevented.

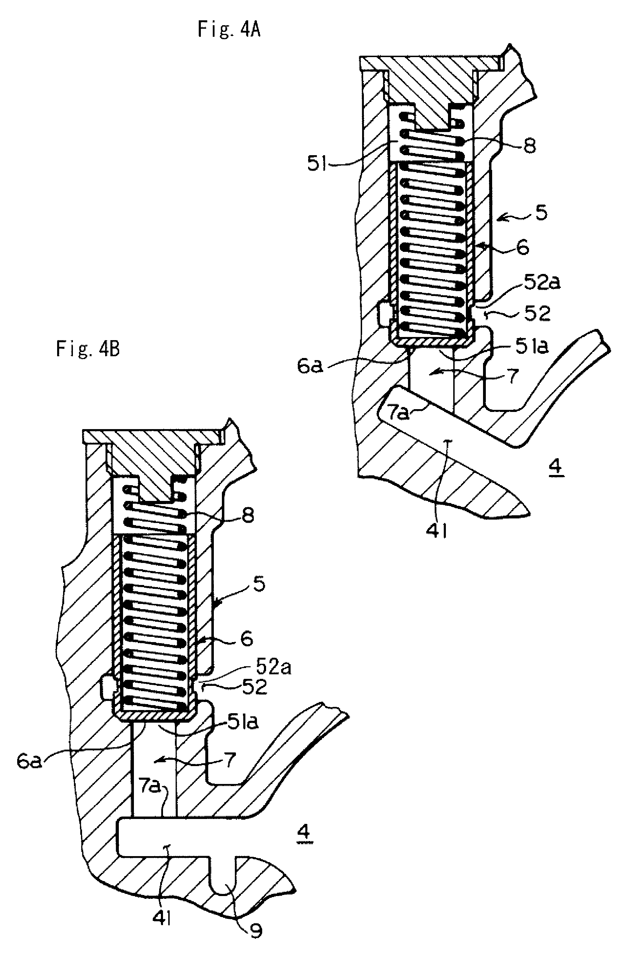

In addition, the branched discharge flow path 41 (or discharge flow path 4) may be inclined upward along the direction of relief flow in the region in which the inflow opening part 7a that provides communication of the discharge flow path 4 with the guide inflow path 7 is formed (see FIG. 4A). Furthermore, a sludge trap 9 may be formed in a position forward of the guide inflow path 7 (see FIG. 4B) in the direction of relief flow in the branched discharge flow path 41 of the discharge flow path 4. This sludge trap 9 will be described with reference to a second embodiment.

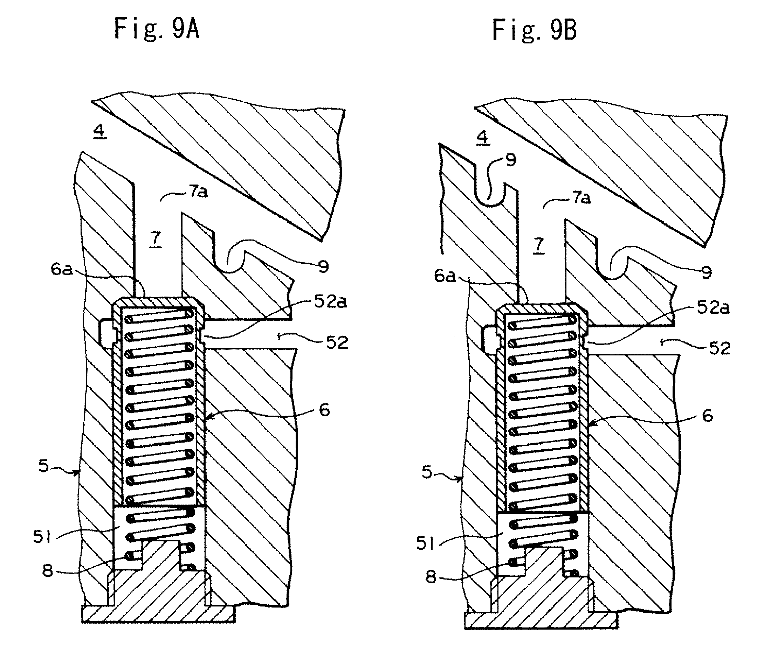

A second embodiment of the present invention will be hereinafter described with reference to FIG. 6 and FIG. 9. In this second embodiment, as shown in FIG. 6B, the valve housing 5 is formed in the casing A so that the relief opening part 51a of the valve guide path 51 is positioned normally in the uppermost part. The sludge trap 9 is formed in the branched discharge flow path 41 of the discharge flow path 4 in a forward position of the guide inflow path 7 in the direction of relief flow. That is to say, the sludge trap 9 is positioned in the upstream side in the direction of relief flow from the guide inflow path 7 (see FIG. 7).

In this second embodiment, the valve guide path 51 is arranged so that the relief opening part 51a of the valve guide path 51 is closed upwardly by the valve main body 6. The valve housing 5 is arranged in the casing A so that the relief opening part 51a of the valve guide path 51 is normally at the uppermost part (see FIG. 6B). A structure in which the relief opening part 51a of the valve guide path 51 is positioned in the uppermost part in this way and the relief opening part 51a is closed upwardly by the valve main body 6a of the valve main body 6 is referred to as a structure in which the valve guide path 51 is arranged in an upward-facing orientation.

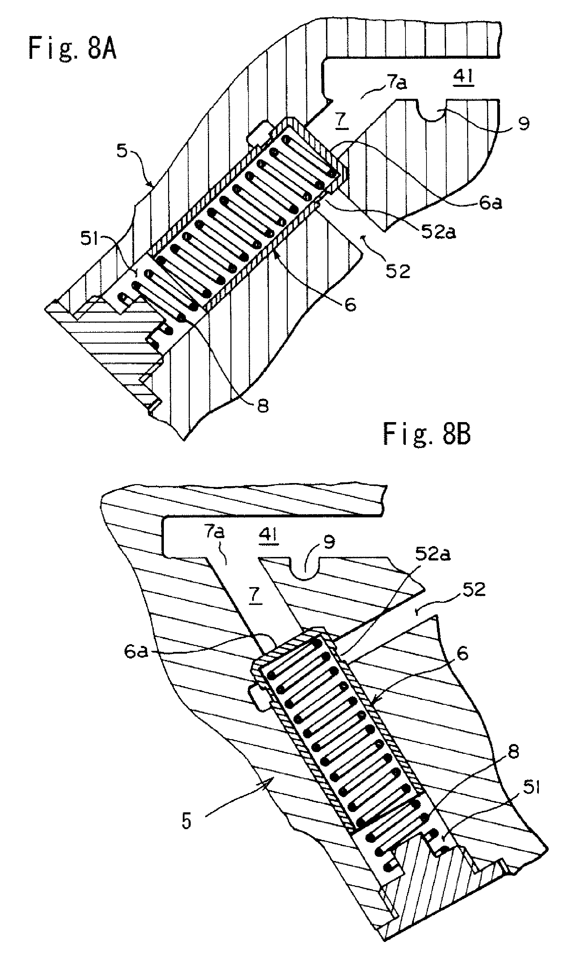

In the second embodiment, similarly to that of the first embodiment described above, the guide direction of the valve guide path 51 is set in the vertical direction (see FIG. 6B), or the guide direction is inclined (See FIGS. 8A and B). Furthermore, the region of the guide inflow opening part 7a that provides communication of the discharge flow path 4 with the guide inflow path 7 may be inclined. The sludge trap 9 is formed in a position forward of the guide inflow path 7 in the direction of relief flow (see FIG. 9A).

In addition, the sludge trap 9 may be formed in the discharge flow path 4 in both a forward position and a rearward position of the guide inflow path 7 in the direction of relief flow of (see FIG. 9B). By provision of the sludge trap 9 in both sides in the direction of relief flow, in the unlikely event of a stoppage of the operation of an apparatus such as a pump or the like resulting in backflow of the fluid Q in the direction of relief flow, the sludge s can be trapped by the sludge trap 9 and the flow of sludge s into the inflow opening part 7a can be prevented.

More particularly, by formation of the sludge trap 9 in the discharge flow path 4 in which the region of the inflow opening part 7a that provides communication with the guide inflow path 7 is inclined in both sides of the inflow opening part 7a in the direction of relief flow, even if a stoppage of the operation of an apparatus such as the pump were to occur and the fluid Q were to flow from the upward to downward side along the incline, the sludge s contained in the fluid Q can be reliably absorbed by the sludge trap 9. While the guide path 51 has communication with both the guide inflow path 7 and discharge flow path 4, the inflow opening part 7a of the guide inflow path 7 side that provides communication between the guide inflow path 7 and discharge flow path 4 is positioned in the lower part (base part) in the orthogonal cross section of the discharge flow path 4.

The sludge trap 9 is formed in the discharge flow path 4 in a position forward of the guide inflow path 7 in the direction of relief flow when the relieving operation of the fluid Q is being performed. The function of the sludge trap 9 is to prevent the sludge s mixed in the fluid Q from reaching the guide inflow path 7. The sludge trap 9 is formed in the lower part in the orthogonal cross section of the discharge flow path 4 or in a lower part of the branched discharge flow path 41 that branches from a part of the discharge flow path 4 as a depression or hole with a substantially circular-shaped cross section in the substantially vertical direction (see FIGS. 6C, 6D).

The mechanism of the second embodiment for preventing influx of the sludge s mixed in the fluid Q into the guide inflow path 7 and valve guide path 51 will be hereinafter described with reference to FIG. 7. The relief opening part 51a of the valve guide path 51 is normally positioned in the uppermost part of the valve guide path 51. The inflow opening part 7a of the guide inflow path 7 is positioned in the lower part in the orthogonal cross section of the discharge flow path 4. The sludge s mixed in the fluid Q such as an oil flowing along the branched discharge flow path 41 of the discharge flow path 4 precipitates due to gravity and accumulates in the lower part in the orthogonal cross section (base part) of the discharge flow path 4.

Furthermore, the sludge trap 9 is formed in the discharge flow path 4 in a position forward of the guide inflow path 7 in the direction of relief flow, the sludge s accumulated in the lower part in the orthogonal cross section of the discharge flow path 4 becomes trapped in the sludge trap 9 as a result of being squeezed and made to flow into the sludge trap 9 by the flow of the fluid Q and, accordingly, influx thereof into the guide inflow path 7 and valve guide path 51 can be prevented (see FIG. 7).

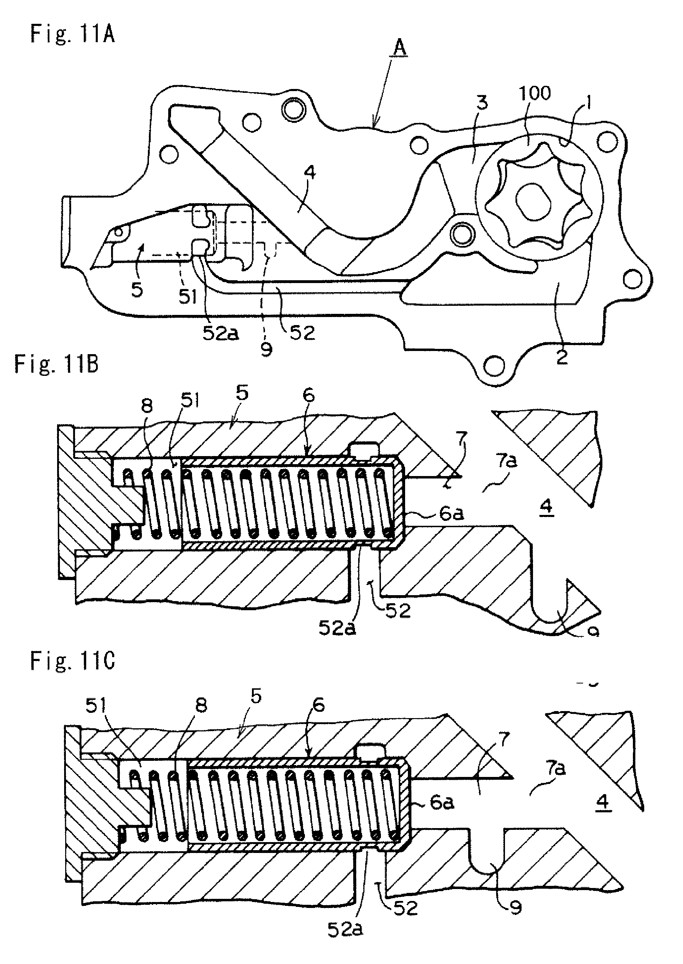

A third embodiment will be hereinafter described with reference to FIG. 11. The valve guide path 51 in this third embodiment is arranged so that the relief opening part 51a of the valve guide path 51 is closed sideways by the valve main body 6. The sideways-facing orientation of the relief opening part 51a of the valve guide path 51 and sideways closure of the relief opening part 51a by the head part 6 of the valve main body 6a is referred to as a structure in which the valve guide path 51 is arranged in a sideways-facing orientation.

In addition, the sludge trap 9 is formed in a forward position of the guide inflow path 7 in the direction of relief flow. The position in which the sludge trap 9 is formed in this third embodiment is either the discharge flow path 4 or the branched discharge flow path 41 (see FIG. 11B), or else it is formed in the guide inflow path 7 (see FIG. 11C). The mechanism of this third embodiment for preventing influx of the sludge s into the guide inflow path 7 and valve guide path 51 is identical to that of the second embodiment.

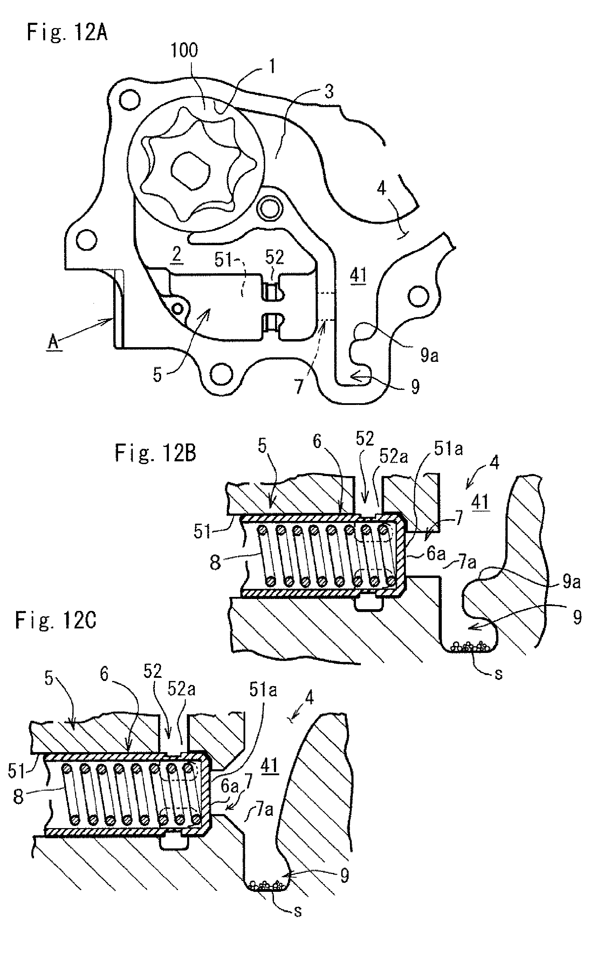

FIG. 12A shows the branched discharge flow path 41 of the third embodiment provided vertically and the base part position of the branched discharge flow path 41 positioned in a lower part than the position of the inflow opening part 7a of the guide inflow path 7. This lower position than the inflow opening part 7a serves as the sludge trap 9. FIG. 12B shows a structure in which an inward-expanded protruding part 9a is formed between the branched discharge flow path 41 and the sludge trap 9 in which, due to the protruding part 9a, it is unlikely that the sludge s will rise upward once it has been trapped. Furthermore, FIG. 12C shows the formation of a region of the inflow opening part 7a as an inclined face that widens towards the branched discharge flow path 41 side that enhances the ease of inflow of the fluid Q.

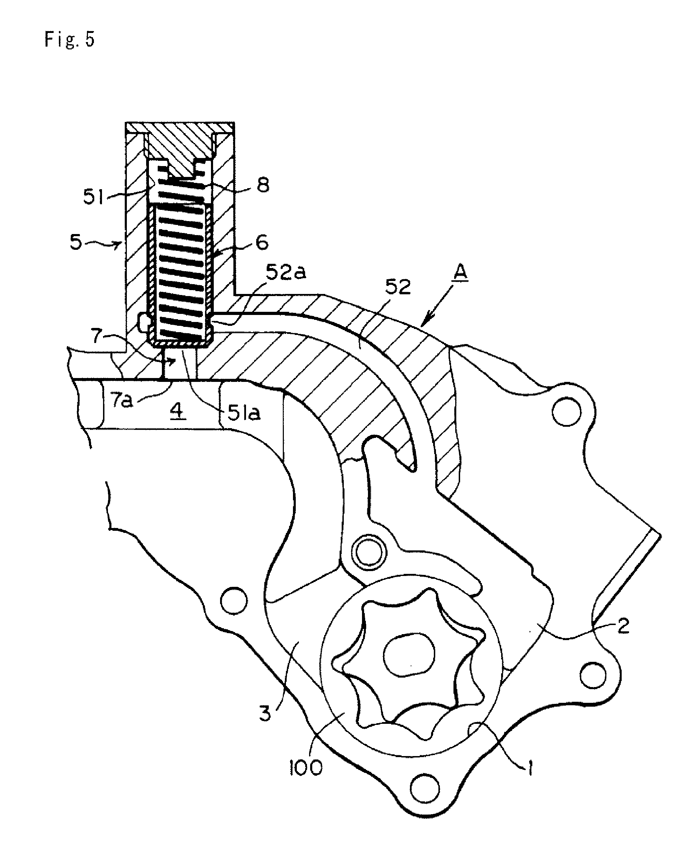

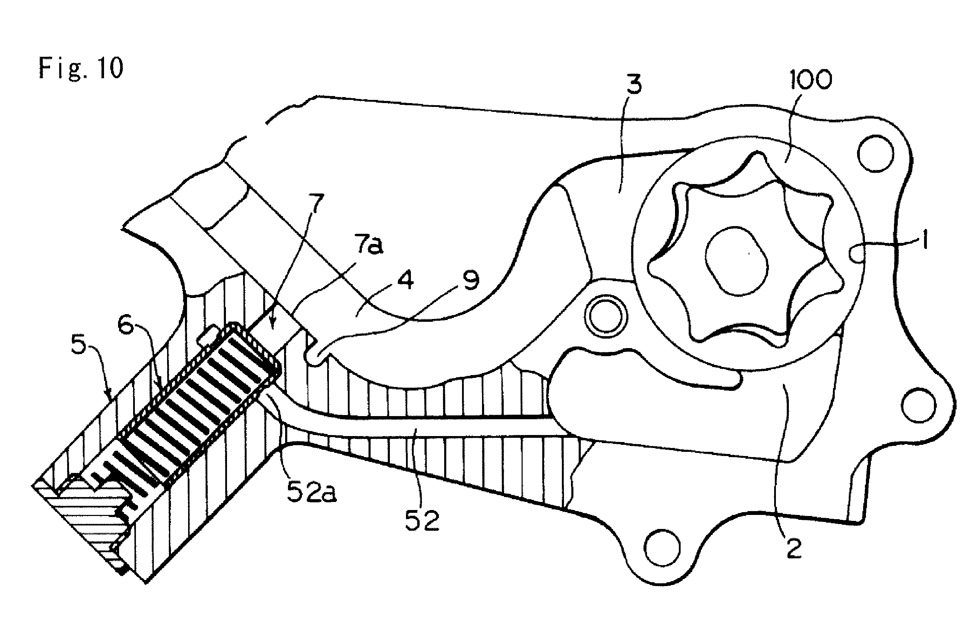

In the first embodiment of the present invention of FIG. 5, the relief valve is directly linked to the discharge flow path 4 main body and there is no branched discharge flow path 41 for the relieving operation formed in the discharge flow path 4. In the second embodiment of the present invention of FIG. 10, the relief valve is directly linked to the discharge flow path 4 main body and there is no branched discharge flow path 41 for the relieving operation formed in the discharge flow path 4. In addition, in the third embodiment as shown in FIG. 11A, the relief valve is directly linked to the discharge flow path 4 in the absence of the formation of the branched discharge flow path 41. In this third embodiment the discharge flow path 41 may be formed in the discharge flow path 4 with the relief valve linked to the discharge flow path 41.

## Claims

1. A relief valve, comprising:
a valve housing; and
a guide inflow path, which is in the same direction as a slide direction of a valve main body that slides along a valve guide path of said valve housing under a predetermined pressure, and which provides communication between a discharge flow path and said valve guide path,
wherein said valve guide path is arranged so that the relief opening part thereof is closed downwardly by said valve main body, and said valve guide path and said guide inflow path are positioned above an orthogonal cross section of said discharge flow path.

2. The relief valve according to claim 1, wherein a sludge trap is formed in a position forward of said guide inflow path in the direction of relief flow.

3. A relief valve, comprising:
a valve housing; and
a guide inflow path, which is in the same direction as a slide direction of a valve main body that slides along a valve guide path of said valve housing under a predetermined pressure, and which provides communication between a discharge flow path and said valve guide path,
wherein said valve guide path is arranged so that the relief opening part thereof is closed upwardly by said valve main body, said valve guide path and said guide inflow path are positioned above an orthogonal cross section of said discharge flow path, and a sludge trap is formed in said discharge flow path in a position forward of said guide inflow path in the direction of relief flow.

4. A relief valve, comprising:
a valve housing; and
a guide inflow path, which is in the same direction as a slide direction of a valve main body that slides along a valve guide path of said valve housing under a predetermined pressure, and which provides communication between a discharge flow path and a relief opening part of said valve guide path,
wherein said valve guide path is arranged so that the relief opening part thereof is closed sideways by said valve main body, and a sludge trap is formed in a position forward of said guide inflow path in the direction of relief flow.

5. The relief valve according to any of claims 2 to 4, wherein said sludge trap is formed in said discharge flow path in a rearward position of said guide inflow path in the direction of relief flow.

6. The relief valve according to any of claims 1 to 5, wherein a branched discharge flow path is formed in said discharge flow path, and said valve guide path communicates with said branched discharge flow path by way of said guide inflow path.

7. The relief valve according to any of claims 1 to 6, wherein a discharge flow path inclines upward along the direction of relief flow in the vicinity of a location for communication with said guide inflow path.

8. The relief valve according to claim 6, wherein said branched discharge flow path is formed in a substantially vertical direction, a sludge trap is connectively formed in a substantially vertical direction from a lower end of said branched discharge flow path, and a guide inflow path is formed substantially horizontally between a lower end position of said branched discharge flow path and the sludge trap.
